Europäisches Patentamt

European Patent Office

Office européen des brevets

(11) Veröffentlichungsnummer: **0 183 677**
**A2**

## (12) EUROPÄISCHE PATENTANMELDUNG

(21) Anmeldenummer: 85890283.6

(22) Anmeldetag: 18.11.85

(51) Int. Cl.⁴: **C21B 13/14**

(30) Priorität: 26.11.84 AT 3730/84

(43) Veröffentlichungstag der Anmeldung:
04.06.86 Patentblatt 86/23

(84) Benannte Vertragsstaaten:
DE GB IT LU SE

(71) Anmelder: VOEST-ALPINE Aktiengesellschaft
Werksgelände
A-4010 Linz(AT)
Anmelder: Korf Engineering GmbH
Neusser Strasse 111
D-4000 Düsseldorf 1(DE)

(72) Erfinder: Der Erfinder hat auf seine Nennung verzichtet

(74) Vertreter: Wolfram, Gustav, Dipl.-Ing.
Schwindgasse 7 P.O. Box 205
A-1041 Wien(AT)

(54) Verfahren und Anlage zur Direktreduktion von Eisenoxidteilchen und zum Einschmelzen der erhaltenen Eisenschwammpartikel in einem Einschmelzvergaser.

(57) Die Eisenoxidteilchen werden in einem Schachtofen (1) reduziert und die erhaltenen Eisenschwammpartikel werden einem Einschmelzvergaser (2) aufgegeben, wobei im letzteren unter Zuführung von Kohle und sauerstoffhältigem Gas ein Kohlefließbett gebildet wird, in welchem die zum Einschmelzen der Eisenschwammpartikel notwendige Wärme sowie das in den Schachtofen einzuführende Reduktionsgas erzeugt werden, und wobei das nach der Reduktion verbleibende Gichtgas aus dem oberen Teil des Schachtofens abgezogen wird und die mit dem Reduktionsgas und/oder mit dem Gichtgas ausgetragenen staubförmigen, hauptsächlich aus Kohle bestehenden Feststoffteilchen ausgewaschen werden.

Um einen optimalen Umsatz der eingesetzten Rohstoffe bei gleichzeitiger Erhöhung des Wasserstoffanteiles im Reduktionsgas zu erreichen, eine nahezu vollständige Nutzbarmachung der durch die Gase ausgetragenen Kohleteilchen zu ermöglichen und die Temperatur des Reduktionsgases zu erhöhen, ohne Bindemittel für die Stäube zu benötigen und ohne daß die Gefahr von Betriebsstörungen und Staubexplosionen in Kauf zu nehmen ist, wird die Suspension der ausgewaschenen Feststoffteilchen eingedickt, in einen klaren Überlauf und einen konzentrierten Kohleschlamm aufgetrennt, der Kohleschlamm zu dem Einschmelzvergaser rückgeführt, mit Sauerstoff druckvergast und mittels im oberen Teil des Einschmelzvergasers angeordneten und gegen das Kohlefließbett gerichteten Brennern verbrannt.

EP 0 183 677 A2

Verfahren und Anlage zur Direktreduktion von Eisenoxidteilchen und zum Einschmelzen der erhaltenen Eisenschwammpartikel in einem Einschmelzvergaser

Die Erfindung betrifft ein Verfahren zur Direktreduktion von Eisenoxidteilchen in einem Schachtofen und zum Einschmelzen der erhaltenen Eisenschwammpartikel in einem Einschmelzvergaser, wobei in letzterem unter Zuführung von Kohle und sauerstoffhältigem Gas ein Kohlefließbett gebildet wird, in welchem die zum Einschmelzen der Eisenschwammpartikel notwendige Wärme sowie das in den Schachtofen einzuführende Reduktionsgas erzeugt werden, und wobei das nach der Reduktion verbleibende Gichtgas aus dem oberen Teil des Schachtofens abgezogen wird und die mit dem Reduktionsgas und/oder mit dem Gichtgas ausgetragenen staubförmigen, hauptsächlich aus Kohle bestehenden Feststoffteilchen ausgewaschen werden, sowie eine Anlage zur Durchführung des Verfahrens.

Ein Verfahren dieser Art ist in der AT-B - 376.241 beschrieben, wobei die mittels eines Heißzyklons oder in Wäschern aus dem Reduktionsgas und gegebenenfalls aus dem Gichtgas abgeschiedenen Feststoffe zu Formkoks agglomeriert werden und dieser Formkoks wieder von oben dem Einschmelzvergaser aufgegeben wird.

Es hat sich jedoch herausgestellt, daß der mit einer Brikettierung verbundene Aufwand relativ hoch ist und daß die Temperatur des Kohlefließbettes nicht in ausreichendem Maße geregelt werden kann, wodurch es unter anderem zur Ablagerung teeriger Bestandteile im Einschmelzvergaser kommen kann.

Die Erfindung bezweckt die Vermeidung dieser Nachteile und Schwierigkeiten und stellt sich die Aufgabe, einen optimalen Umsatz der eingesetzten Rohstoffe bei gleichzeitiger Erhöhung des Wasserstoffanteiles im Reduktionsgas zu erreichen, eine nahezu vollständige Nutzbarmachung der durch die Gase ausgetragenen Kohleteilchen zu ermöglichen und die Temperatur des Reduktionsgases zu erhöhen, ohne Bindemittel für die Stäube zu benötigen und ohne daß die Gefahr von Betriebsstörungen und Staubexplosionen in Kauf zu nehmen ist.

Diese Aufgabe wird bei einem Verfahren der eingangs bezeichneten Art erfindungsgemäß dadurch gelöst, daß die Suspension der ausgewaschenen Feststoffteilchen eingedickt, in einen klaren Überlauf und einen konzentrierten Kohleschlamm aufgetrennt wird, der Kohleschlamm zu dem Einschmelzvergaser rückgeführt, mit Sauerstoff druckvergast und mittels im oberen Teil des Einschmelzvergasers angeordneten und gegen das Kohlefließbett gerichteten Brennern verbrannt wird.

Die Arbeitsweise einer Kohlestaubdruckvergasung ist an sich bekannt. Dabei wird eine homogene Mischung von Kohle und Wasser erzeugt, die Suspension mit einer Pumpe auf einen hohen Vergasungsdruck gebracht und durch Zuführung von Sauerstoff eine Verbrennung der Kohle bewirkt, wobei eine Temperatur von etwa 1500°C erzeugt wird. Die Verbrennung erfolgt in einem feuerfest ausgekleideten Brennraum; die Reaktion in der Flamme läuft sehr schnell ab, so daß die Verweilzeit im Brennraum nur wenige Sekunden beträgt.

Nach einer bevorzugten Ausführungsform wird der Kohleschlamm vor der Druckvergasung durch teilweise Entwässerung und/oder durch Zugabe von aus dem Reduktionsgas abgeschiedenen Kohleteilchen und/oder durch Zugabe von Feinkohle auf eine Feststoffkonzentration von 50 bis 80 % gebracht.

Die Menge des in den Einschmelzvergaser rückgeführten Kohleschlammes kann zweckmäßig 10 bis 35 % der insgesamt eingebrachten Kohle betragen.

Vorteilhaft wird die Druckvergasung des Kohleschlammes bei einem Druck von 2 bis 10 bar durchgeführt.

Die Erfindung umfaßt weiters eine Anlage zur Durchführung des erfindungsgemäßen Verfahrens mit einem Einschmelzvergaser, der einen unteren Abschnitt zur Aufnahme von schmelzflüssigem Metall, einen mittleren Abschnitt für ein Kohlefließbett und einen oberen Beruhigungsabschnitt aufweist und mit Zuführungen für Kohle und mit Einleitdüsen für sauerstoffhältiges Gas sowie mit einer Abführung für gebildetes Reduktionsgas versehen ist, und mit einem Schachtofen, der mit einer Einführung für Eisenoxidteilchen und einer Einführung für Reduktionsgas sowie mit einer Ableitung für Gichtgas, in welche gegebenenfalls ein Gaswäscher eingebaut ist, versehen ist. Die Anlage ist durch die folgenden Merkmale gekennzeichnet:

a) daß in der Reduktionsgasabführung ein Gaswäscher zur Abtrennung von Feststoffteilchen,

b) daß eine Einrichtung zum Sammeln und Homogenisieren der aus dem Reduktionsgas und/oder aus dem Gichtgas abgetrennten Feststoffteilchen zur Bildung einer Suspension mit hoher Feststoffteilchenkonzentration,

c) daß eine Pumpe mit einer Zuführung der Feststoffsuspension zu dem Einschmelzvergaser unter hohem Druck und

d) daß eine oder eine Mehrzahl von Brenneinrichtungen im oberen Teil des Einschmelzvergasers, welche Brenneinrichtung eine Zuführung für Sauerstoff aufweist, vorgesehen sind.

Nach einer besonderen Ausführungsform der Erfindung ist an der Sammeleinrichtung für die Feststoffteilchen eine Trenneinrichtung zur Bildung eines klaren Überlaufes und eines konzentrierten Kohleschlammes als Unterlauf vorgesehen.

Die Brenneinrichtung umfaßt mindestens einen Brenner, welcher Brenner jeweils eine Druckleitung für Kohleschlamm und eine Sauerstoffleitung aufweist, die in einen feuerfest ausgekleideten Brennraum münden, und der gebildete Flammenstrahl ist nach unten zu auf das Kohlefließbett gerichtet.

Es hat sich als günstig erwiesen, daß der Einschmelzvergaser und der Schachtofen eine bauliche Einheit bilden.

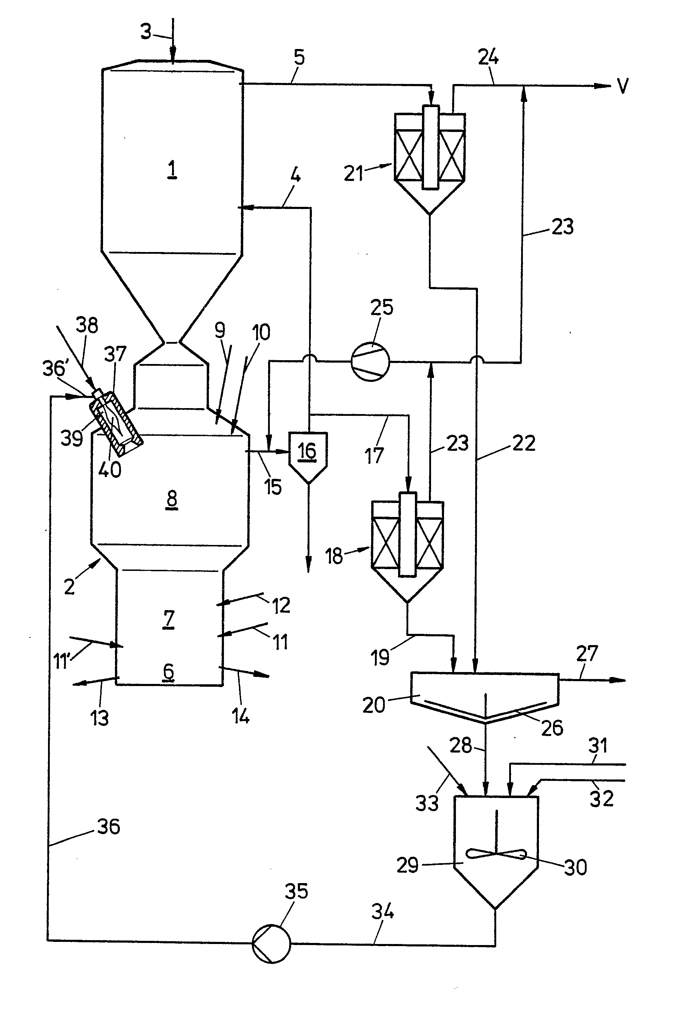

Die Erfindung ist an einem Ausführungsbeispiel in der Zeichnung, die eine schematische Darstellung der Anlage zeigt, näher erläutert.

Mit 1 ist ein Direktreduktionsschachtofen und mit 2 ein Einschmelzvergaser bezeichnet, die zu einer baulichen Einheit verbunden sind. Der Reduktionsschachtofen weist eine Einführung 3 für Eisenoxidteilchen und eine Einführung 4 für Reduktionsgas auf. Weiters besitzt der Schachtofen im oberen Teil eine Ableitung 5 für das nach der Reduktion verbleibende Gichtgas.

Der mit dem Reduktionsschachtofen integral verbundene Einschmelzvergaser weist einen unteren Abschnitt 6 für schmelzflüssiges Metall und Schlacke, einen mittleren Abschnitt 7 für ein Kohlefließbett und einen erweiterten oberen Abschnitt 8 auf, der als Beruhigungsraum dient. Im Einschmelzvergaser, u.zw. im oberen Beruhigungsabschnitt 8, ist eine Zuführung 9 für Kohle und eine Zuführung 10 für Zuschlagstoffe vorgesehen, im mittleren Abschnitt 7 eine Zuführung 11 für Kohle. Im Grenzbereich vom mittleren Abschnitt 7 zum unteren Abschnitt 6 ist der Einschmelzvergaser 2 weiters mit Einleitdüsen 11' für sauerstoffhältiges Gas versehen, von denen nur eine dargestellt ist. Im Bereich des mittleren Abschnittes 7 können auch zusätzliche Zuführungen 12 für Wasser und Kohlenwasserstoffe vorgesehen sein. Weiters sind im unteren Teil des Einschmelzvergasers Abstiche 13 für schmelzflüssiges Metall und 14 für Schlacke vorgesehen.

Der obere Beruhigungsabschnitt 8 weist eine Abführung 15 für das gebildete Reduktionsgas auf, die zu einem Heißzyklon 16 führt, von wo das teilweise von Feststoffteilchen befreite Reduktionsgas über die Leitung 4 in den Schachtofen geführt wird. Ein anderer Teil des Reduktionsgases wird über die Leitung 17 zum Gaswäscher 18 geführt, wo die noch verbliebenen Feststoffteilchen ausgewaschen werden und zusammen mit dem Waschwasser über die Leitung 19 zur Sammeleinrichtung 20 geführt werden.

Das aus der Ableitung 5 des Reduktionsschachtofens 1 mit staubförmigen, hauptsächlich aus Kohle bestehenden Feststoffteilchen beladene Gichtgas wird ebenfalls zu einem Gaswäscher 21 geführt und die Suspension aus Waschwasser und Feststoffteilchen über die Leitung 22 gleichfalls zur Sammeleinrichtung 20 geführt.

Das von Feststoffteilchen befreite Reduktionsgas aus dem Wäscher 18 wird über eine Leitung 23 als Überschußgas einer Verbraucherstation V zugeführt, an welche auch über die Leitung 24 aus dem Gaswäscher 21 Überschußgas zugeliefert wird. Ein Teil des aus dem Gaswäscher 18 kommenden Überschußgases kann auch als Kühlgas über einen Verdichter 25 zum Heißzyklon 16 zurückgeleitet und von dort zur Reduktionsgaseinführung des Schachtofens geführt werden.

Die Kohleteilchensuspension, die aus dem Gaswäscher 21 und aus dem Gaswäscher 18 vereinigt ist, wird in der Sammeleinrichtung 20, die eine Trenn- bzw. Absetzeinrichtung 26 aufweist, in einen klaren Überlauf 27 und einen konzentrierten Unterlauf, nämlich einen konzentrierten Kohleschlamm, getrennt. Der Kohleschlamm wird über die Leitung 28 in einen Homogenisierbehälter 29 gebracht, der ein Rührwerk 30 aufweist. In diesem Homogenisierbehälter wird über die Zuführung 31 Feinkohle und gegebenenfalls über die Zuführung 32 Feinkalk eingebracht. Eine weitere Zuführung 33 ist vorgesehen, durch die der im Heißzyklon 16 anfallende Staub in den Homogenisierbehälter eingebracht werden kann.

Der hochkonzentrierte Kohleschlamm mit einem Feststoffgehalt von 50 bis 80 % wird gegebenenfalls nach Lagerung in einem nicht dargestellten Dosierbunker über die Leitung 34 einer Pumpe 35 zugeführt, in der der Kohleschlamm auf einen Druck von 2 bis 10 bar gebracht wird. Der Kohleschlamm wird dann über die Druckleitung 36 einer Brenneinrichtung 37 zugeführt, die einen oder einen Kranz von Brennern umfaßt, welche die Wand des Beruhigungsraumes des Einschmelzvergasers durchsetzen. Diese Brenner weisen jeweils eine Druckleitung 36' und eine Sauerstoffleitung 38 auf, welche in einer feuerfest ausgekleideten Brennraum 39 münden. In diesem Brennraum bzw. Brennräumen erfolgt die Kohlenstaubdruckvergasung unter Bildung eines Flammenstrahles 40, der nach unten zu auf das Kohlefließbett gerichtet ist.

Zweckmäßig wird bei dem erfindungsgemäßen Verfahren die zu verarbeitende Kohle in einen Grobkorn- und einen Feinkornanteil geteilt. Der Grobkornanteil wird für die Bildung des Kohle- bzw. Koksbettes verwendet und durch die Leitung 9 eingeführt; der Grobkornanteil hat eine

Korngröße von mehr als 3 mm. Der Feinkornanteil wird über die Leitung 32 dem Homogenisierbehälter 29 zugeleitet; der Feinkornanteil hat eine Korngröße von weniger als 3 mm.

Die Vorteile des erfindungsgemäßen Verfahrens bzw. der beschriebenen Anlage bestehen darin, daß die im Zyklon 16 bzw. in den Gaswäschern 18 und 21 abgeschiedenen, überwiegend aus Kohlenstoff bestehenden Feststoffteilchen ohne weitere Behandlung wieder eingesetzt werden können, wobei man einen Kohlenstoffumsetzungsgrad bis zu 99 % erreicht, und daß das Temperaturprofil im Einschmelzvergaser günstig gestaltet wird; im Beruhigungsraum bzw. -abschnitt des Einschmelzvergasers werden dadurch höhere Temperaturen erzielt als bisher, wodurch auch eine bessere Vorerhitzung der in den Einschmelzvergaser von oben eingebrachten Materialien, nämlich der Kohle, der Zuschläge und des Eisenschwammes, erreicht wird. Ein weiterer Vorteil besteht darin, daß durch die höhere Temperatur im Beruhigungsraum des Einschmelzvergasers die unerwünschte Abscheidung von Teer bzw. teerigen Bestandteilen vermieden wird.

**Ansprüche**

1. Verfahren zur Direktreduktion von Eisenoxidteilchen in einem Schachtofen und zum Einschmelzen der erhaltenen Eisenschwammpartikel in einem Einschmelzvergaser, wobei in letzterem unter Zuführung von Kohle und sauerstoffhältigem Gas ein Kohlefließbett gebildet wird, in welchem die zum Einschmelzen der Eisenschwammpartikel notwendige Wärme sowie das in den Schachtofen einzuführende Reduktionsgas erzeugt werden, und wobei das nach der Reduktion verbleibende Gichtgas aus dem oberen Teil des Schachtofens abgezogen wird und die mit dem Reduktionsgas und/oder mit dem Gichtgas ausgetragenen staubförmigen, hauptsächlich aus Kohle bestehenden Feststoffteilchen ausgewaschen werden, dadurch gekennzeichnet, daß die Suspension der ausgewaschenen Feststoffteilchen eingedickt, in einen klaren Überlauf und einen konzentrierten Kohleschlamm aufgetrennt wird, der Kohleschlamm zu dem Einschmelzvergaser rückgeführt, mit Sauerstoff druckvergast und mittels im oberen Teil des Einschmelzvergasers angeordneten und gegen das Kohlefließbett gerichteten Brennern verbrannt wird.

2. Verfahren nach Anspruch 1, dadurch gekennzeichnet, daß der Kohleschlamm vor der Druckvergasung durch teilweise Entwässerung und/oder durch Zugabe von aus dem Reduktionsgas abgeschiedenen Kohleteilchen und/oder durch Zugabe von Feinkohle auf eine Feststoffkonzentration von 50 bis 80 % gebracht wird.

3. Verfahren nach Anspruch 1 oder 2, dadurch gekennzeichnet, daß die Druckvergasung des Kohleschlammes bei einem Druck von 2 bis 10 bar durchgeführt wird.

4. Verfahren nach einem der Ansprüche 1 bis , dadurch gekennzeichnet, daß der Kohleschlamm in einer Menge von 10 bis 35 % der Gesamtkohle eingebracht wird.

5. Anlage zur Durchführung des Verfahrens nach einem der Ansprüche 1 bis 4, mit einem Einschmelzvergaser (2), der einen unteren Abschnitt (6) zur Aufnahme von schmelzflüssigem Metall, einen mittleren Abschnitt (7) für ein Kohlefließbett und einen oberen Beruhigungsabschnitt (8) aufweist und mit Zuführungen (9, 11) für Kohle und mit Einleitdüsen (11') für sauerstoffhältiges Gas sowie mit einer Abführung (15) für gebildetes Reduktionsgas versehen ist, und mit einem Schachtofen (1), der mit einer Einführung (3) für Eisenoxidteilchen und einer Einführung (4) für Reduktionsgas sowie mit einer Ableitung (5) für Gichtgas, in welche gegebenenfalls ein Gaswäscher (21) eingebaut ist, versehen ist, dadurch gekennzeichnet, daß

a) in der Reduktionsgasabführung (15) ein Gaswäscher (18) zur Abtrennung von Feststoffteilchen,

b) eine Einrichtung (20) zum Sammeln und Homogenisieren der aus dem Reduktionsgas und/oder aus dem Gichtgas abgetrennten Feststoffteilchen zur Bildung einer Suspension mit hoher Feststoffteilchenkonzentration,

c) eine Pumpe (35) mit einer Zuführung (34) der Feststoffsuspension zu dem Einschmelzvergaser (2) unter hohem Druck und

d) eine oder eine Mehrzahl von Brenneinrichtungen (37) im oberen Teil (8) des Einschmelzvergasers (2), welche Brenneinrichtung (37) eine Zuführung (38) für Sauerstoff aufweist, vorgesehen sind.

6. Anlage nach Anspruch 5, dadurch gekennzeichnet, daß an der Sammeleinrichtung (20) für die Feststoffteilchen eine Trenneinrichtung (26) zur Bildung eines klaren Überlaufes (27) und eines konzentrierten Kohleschlammes vorgesehen ist.

7. Anlage nach Anspruch 5 oder 6, dadurch gekennzeichnet, daß die Brenneinrichtung (37) mindestens einen Brenner umfaßt, welcher Brenner jeweils eine Druckleitung (36') für Kohleschlamm und eine Sauerstoffleitung (38) aufweist, die in einen feuerfest ausgekleideten Brennraum (39) münden, und daß der gebildete Flammenstrahl (40) nach unten zu auf das Kohlefließbett gerichtet ist.

8. Anlage nach einem der Ansprüche 5 bis 7, dadurch gekennzeichnet, daß der Einschmelzvergaser (2) und der Schachtofen (1) eine bauliche Einheit bilden.